Europäisches Patentamt

European Patent Office

Office européen des brevets

(19)

(11) Numéro de publication : **0 343 368 B1**

(12) **FASCICULE DE BREVET EUROPEEN**

(45) Date de publication du fascicule du brevet :
**11.03.92 Bulletin 92/11**

(51) Int. Cl.$^5$ : **B23P 6/00,** F22B 37/00,
B23Q 5/12

(21) Numéro de dépôt : **89106831.4**

(22) Date de dépôt : **17.04.89**

(54) **Machine de chemisage interne à distance par manchon de l'extrémité de tubes d'échangeurs de chaleur.**

(30) Priorité : **25.04.88 FR 8805448**

(43) Date de publication de la demande :
**29.11.89 Bulletin 89/48**

(45) Mention de la délivrance du brevet :
**11.03.92 Bulletin 92/11**

(84) Etats contractants désignés :
**BE CH DE ES FR GB IT LI SE**

(56) Documents cités :
**EP-A- 0 064 436**
**EP-A- 0 198 223**
**FR-A- 2 211 721**
**FR-A- 2 598 950**

(73) Titulaire : **STEIN INDUSTRIE Société Anonyme
dite:
19-21, avenue Morane Saulnier
F-78140 Vélizy Villacoublay (FR)**
Titulaire : **ELECTRICITE DE FRANCE Service
National
2, rue Louis Murat
F-75008 Paris (FR)**

(72) Inventeur : **Bonnand, Christian
12ter rue de la Libération Bachy
F-59830 Cysoing (FR)**
Inventeur : **Mascart, Dominique
70bis rue de la Festingue
F-59390 Toufflers (FR)**
Inventeur : **Druelle, Philippe
7 rue de Verdun
F-93460 Gournay sur Marne (FR)**

(74) Mandataire : **Weinmiller, Jürgen et al
Lennéstrasse 9 Postfach 24
W-8133 Feldafing (DE)**

**Description**

La présente invention concerne une machine de chemisage interne à distance par manchon de l'extrémité de tubes d'échangeur de chaleur sertis dans une plaque tubulaire, au-dessous de laquelle est disposée une boîte à eau accessible depuis l'extérieur par une ouverture de visite, par un procédé comportant l'introduction d'un manchon dans l'extrémité du tube, l'expansion diamétrale du manchon dans une zone à l'intérieur de la plaque tubulaire et dans une zone au-delà de cette plaque tubulaire, puis le dudgeonnage et le soudage du manchon dans chacune des zones d'expansion, cette machine comportant un dispositif tireur-pousseur à l'extérieur de la boîte à eau, un tube flexible reliant le dispositif tireur-pousseur à une unité motorisée d'entraînement des outils de fixation du manchon, un chargeur d'outils en tête d'un câble entraîné par le dispositif tireur-pousseur, et des moyens pour amener successivement l'extrémité du tube flexible en face de l'extrémité de chacun des tubes.

Elle s'applique notamment au chemisage interne de l'extrémité de tubes de générateurs de vapeur de réacteurs nucléaires à eau pressurisée, en vue de la réparation de fissurations ou corrosions près de l'extrémité de tels tubes.

On a déjà proposé dans le document FR-A-2598209 un dispositif de chemisage à distance de l'extrémité d'un tube de générateur de vapeur de réacteur nucléaire à eau pressurisée, dudgeonné dans une plaque tubulaire épaisse en-dessous de laquelle se trouve une boîte à eau accessible depuis l'extérieur par une ouverture de visite, par un procédé comportant l'introduction d'un manchon dans le tube par son extrémité, l'expansion diamétrale du manchon dans deux zones au voisinage de cette extrémité, l'une étant dans l'épaisseur de la plaque tubulaire et l'autre au-delà de cette plaque tubulaire, puis le dudgeonnage du manchon dans chacune des zones d'expansion, ce dispositif comportant un organe de manutention muni d'un bras dont l'extrémité peut venir se placer à la verticale de l'un quelconque des tubes, sous la plaque tubulaire, et un élément tubulaire de guidage fixe à l'extrémité du bras dans une direction perpendiculaire à la plaque tubulaire, un tube flexible fixé à l'une de ses extrémités, près de la plaque tubulaire, à l'élément tubulaire de guidage passant par l'ouverture de visite et ayant son autre extrémité à l'extérieur de la boîte à eau, un ensemble de chargement et de manutention relié à l'extrémité du tube flexible extérieure à la boîte à eau pour assurer le déplacement, à l'intérieur du tube flexible, d'un manchon à l'intérieur duquel est placé un expanseur hydraulique et qui est fixé, pour son déplacement, à l'extrémité d'un câble tubulaire souple alimenté en fluide hydraulique sous pression, et un ensemble de manutention et de dudgeonnage comportant un outillage de dudgeonnage fixé à l'extrémité d'un élément souple tubulaire associé à un organe de manutention disposé à l'extérieur de la boîte à eau pour assurer son déplacement dans le tube flexible, et relié à des organes moteurs par un élément flexible passant dans l'élément souple tubulaire.

Un tel dispositif ne permet cependant ni l'entraînement de n'importe quel outil, ni de vérifier que les différentes opérations notamment le dudgeonnage, s'effectuent convenablement. Lorsque le dudgeonnage du manchon dans le tube au-delà de la plaque tubulaire est commandé par les organes moteurs de l'organe de manutention à l'extérieur de la boîte à eau et par l'élément flexible passant dans l'élément tubulaire souple, on ne peut vérifier que le mouvement imprimé par les organes moteurs est convenablement transmis à l'outil de dudgeonnage, ni si le nombre de tours de cage du dudgeon est bien égal à celui requis par assurer une fixation étanche du manchon dans le tube. On ne peut non plus contrôler le couple exercé par le moteur de dudgeonnage disposé dans la boîte à eau pour assurer le dudgeonnage à l'intérieur de la plaque tubulaire. Enfin les déplacements du tube flexible entraînent une variation de son allongement, de sorte que la position des outils à l'extrémité du câble tubulaire souple n'est pas déterminée avec précision.

La présente invention a pour but d'assurer les diverses opérations de nettoyage de l'intérieur des tubes, de mise en place et d'accostage du manchon dans les tubes, de soudure du manchon au tube dans les zones accostées, de contrôle des soudures, de dudgeonnage et de traitement thermique des zones dudgeonnées et soudées, avec une grande précision et de préférence en contrôlant constamment la progression de ces opérations, de façon à obtenir une étanchéité parfaite sur les extrémités de tubes chemisées intérieurement.

La machine selon l'invention est caractérisée en ce que l'unité motorisée d'entraînement des outils comporte deux moyeux cannelés superposés, dont l'un est entraîné par un moteur électrique à faible vitesse, et l'autre par un moteur pneumatique à vitesse de rotation élevée.

Elle répond en outre de préférence à au moins l'une des caractéristiques suivantes :

– Le moteur pneumatique est monté sur un palier et est muni d'une cellule de force mesurant son couple.

– Les outils de dudgeonnage sont entraînés par le moyeu cannelé du moteur pneumatique venant en prise avec un mors cannelé d'entraînement de leur broche, dont les cannelures permettent le glissement du mors.

– Les outils de dudgeonnage sont munis d'un ressort maintenant leur broche en position sensiblement écartée de la cage au repos, et comprimable par le câble de poussée.

– L'outil de nettoyage de l'intérieur des tubes comprend une brosse flexible entraînée en rotation par le moteur pneumatique et en translation par un système à vis et écrou, la vis étant munie d'un alésage central d'aspiration des particules détachées par la brosse, et le câble de poussée de la brosse flexible étant lui-même muni d'un passage interne d'évacuation de ces particules.

– L'outil de mise en place du manchon à l'intérieur du tube comprend une baudruche en matériau plastique gonflable sous l'effet d'une pression hydraulique dans une chambre interne.

– La baudruche est portée par un support à cône rétractable muni d'un contact de détection de la position correcte du manchon à l'intérieur du tube.

– La baudruche est reliée à une pompe doseuse de très faibles volumes, et à des moyens de comparaison de l'augmentation de pression après chaque coup de pompe à l'augmentation après les coups de pompe précédents.

– L'outil d'accostage du manchon contre le tube à l'intérieur de la plaque tubulaire est un dudgeon à galets parallèles à la broche, munis d'une bosse de déformation localisée du manchon, à entraînement par le moteur pneumatique par l'intermédiaire d'un système à vis et écrou.

– L'outil d'accostage du manchon contre le tube au-delà de la plaque tubulaire est un dudgeon à galets inclinés ou une baudruche à volume contrôlé en fonction de la pression hydraulique interne jusqu'au delà de la limite élastique du tube.

– Les outils de soudage du manchon sur le tube sont des lances souples entraînées en rotation par le moteur électrique, reliées à des conduits d'alimentation en eau, gaz, et électricité internes au câble de poussée.

– Elle comporte près de l'unité motorisé d'entraînement des outils des cellules de détection de la présence d'outils et de comptage du nombre de tours des outils.

– Elle comporte des sondes à ultrasons de vérification des soudures, entraînées en rotation par le moteur pneumatique et en translation par un système à vis et écrou relié au moteur pneumatique enregistrant les échos d'interface entre le manchon et le tube et l'écho de fond sur le tube.

– Son tube flexible est constitué par un assemblage d'éléments cylindriques à extrémité emboîtées les unes dans les autres.

– Son tube flexible est constitué par un assemblage d'éléments emboîtés à extrémités formant rotules.

Il est décrit ci-après, à titre d'exemple et en référence aux figures du dessin annexé, une machine de chemisage interne de l'extrémité de tubes de générateurs de vapeur de réacteur nucléaire à eau pressurisée.

La figure 1 est une vue générale en coupe de la partie du dispositif à l'intérieur de la boîte à eau.

La figure 2A est une vue en coupe partielle de l'organe tireur-pousseur du câble de commande à l'extérieur de la boîte à eau, et la figure 2B une coupe par l'axe IIB-IIB de la figure 2A.

La figure 3 est une vue en coupe partielle de l'unité motorisée disposée à proximité de la plaque tubulaire.

La figure 4 est une coupe de l'organe de nettoyage de l'intérieur des tubes.

Les figures 5A, 5B, 5C sont des vues en coupe partielle de l'organe de fixation provisoire d'un manchon à l'intérieur d'un tube.

Les figures 6A et 6B sont des vues en coupe d'un dudgeon d'accostage à galets parallèles à la broche.

La figure 7 est une coupe partielle d'une lance de contrôle ultrasonique des soudures.

Les figures 8A, 8B sont des vues en coupe d'un dudgeon assurant le dudgeonnage définitif du manchon dans le tube.

La figure 9 est une coupe d'un élément de tube souple d'introduction des outils dans la boîte à eau à extrémités emboîtables.

La figure 10 est une coupe d'un élément de tube souple d'introduction des outils dans la boîte à eau à extrémités formant rotules.

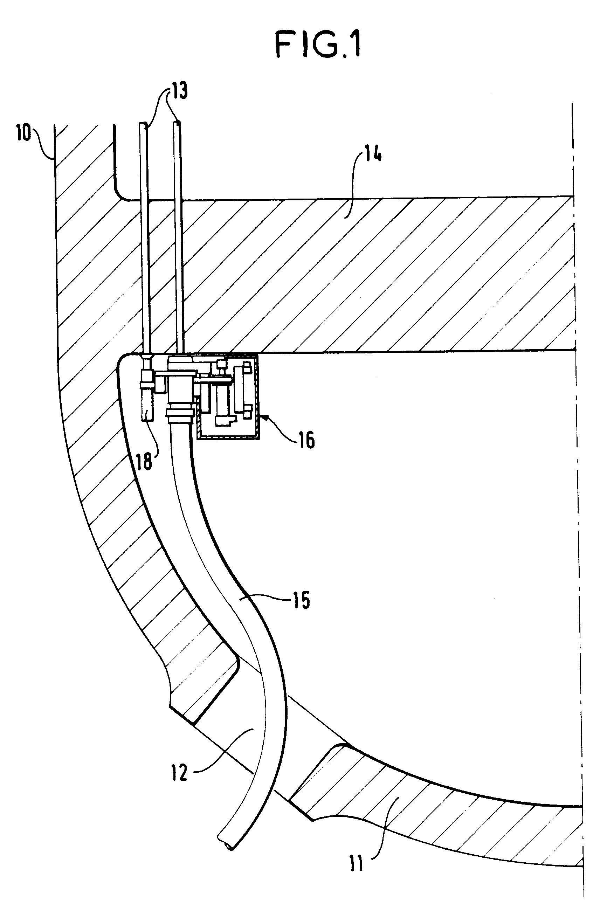

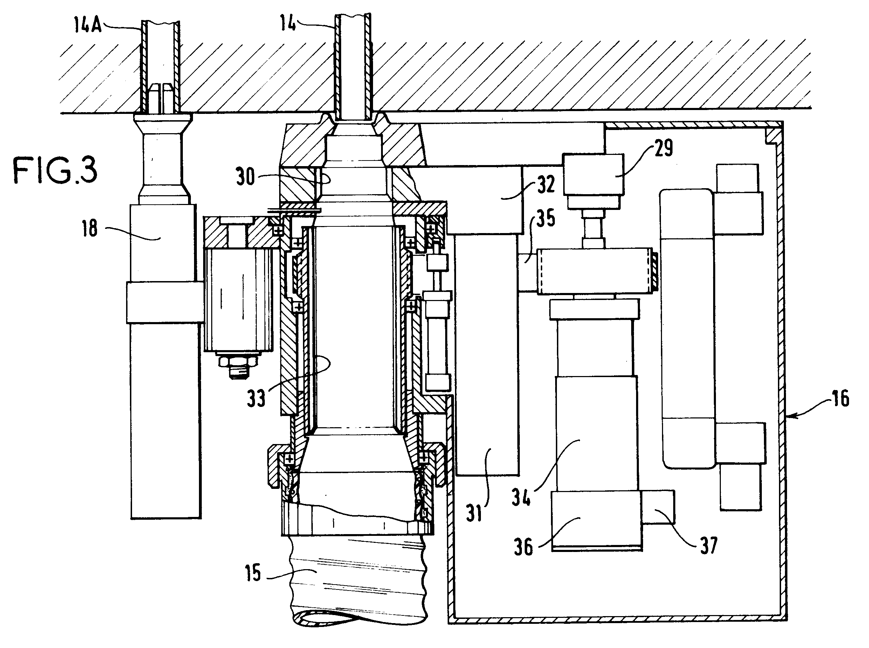

Dans la figure 1, l'échangeur de chaleur 10 se termine par une boîte à eau 11 percée d'un trou de visite 12. Les tubes 13 de l'échangeur traversent la plaque tubulaire épaisse 14. Les manchons de chemisage interne des tubes doivent être introduits dans l'extrémité des tubes jusqu'à une certaine distance au-delà de la face de la plaque tubulaire opposée à la boîte à eau. Les diverses opérations sont effectuées grâce à une unité motorisée 16, qui sera représentée plus en détail en figure 3. Les outils sont amenés à l'unité motorisée à travers un tube souple 15 passant par le trou de visite. Une jambe 17 maintient un anneau 17A qui guide le tube souple à la verticale du tube à chemiser. L'unité motorisée est maintenue en position à un moment donné devant le tube à chemiser par un organe porteur à l'extrémité d'un bras de mise en place, non représenté, et fixée sur la plaque tubulaire à l'aide d'organes de blocage dans l'extrémité d'autres tubes, tels que l'organe 18.

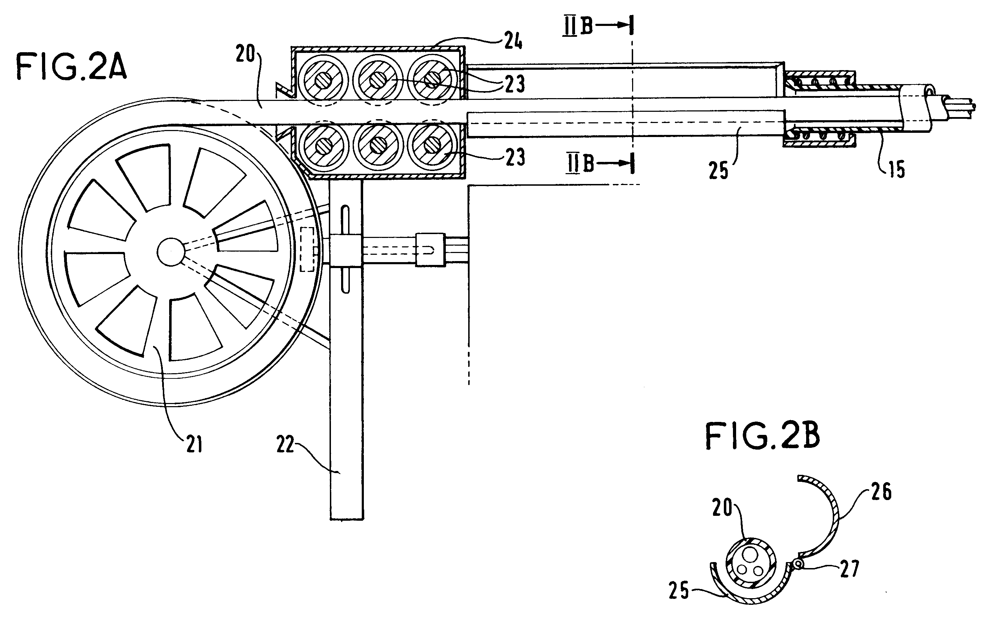

L'organe tireur-pousseur, externe à la boîte à eau, et donc accessible sans danger, est représenté en figures 2A et 2B. Il est destiné à tirer ou pousser un câble 20, enroulé sur un tambour 21, supporté par une poutre 22. Des galets motorisés 23 disposés dans un boîter 24, permettent de tirer ou pousser le câble. Entre ces galets et l'extrémité du tube flexible 15 est disposé un chargeur cylindrique 25 s'ouvrant en deux dans le sens de la longueur, son couvercle 26 pouvant pivoter autour d'un axe 27. Ce chargeur, de diamètre extérieur légèrement inférieur au diamètre intérieur du tube flexible 15, sert à l'introduction des outils que l'on fixe sur l'extrémité du câble 20.

L'unité motorisée représentée en figure 3 est maintenue en position devant le tube à chemiser 15 par un organe porteur, de type connu, partiellement représenté, par exemple un robot. On voit comme en figure 1 un organe 18 de blocage dans l'extrémité d'un tube adjacent 14A, d'autres organes de blocage n'étant pas représentés.

Cette unité comporte deux moyeux cannelés d'entraînement superposés, un moyeu supérieur 30 et un moyeu inférieur 33. Le moyeu supérieur 30 est entraîné par le moteur électrique 31 par l'intermédiaire d'une courroie 32. Le moyeu inférieur 33 est entraîné par le moteur pneumatique 34 par l'intermédiaire d'une courroie 35. Il est monté sur un palier 36. Une cellule de force 37 permet de suivre la valeur du couple transmis au moyeu 33. Des codeurs tels que 29 fixent le nombre de tours de broche à imprimer aux dudgeons ou le nombre de tours ou fraction de tours de vis à imprimer aux lances de soudage ou aux sondes de contrôle des soudures aux ultrasons, dont il sera question ci-après.

Des cellules à infra-rouge, non représentées, permettent de détecter la présence d'outils dans l'unité motorisée et de compter le nombre de tours de cage pour les dudgeons ou de tours d'écrou pour les outils entraînés par un organe à vis et écrou.

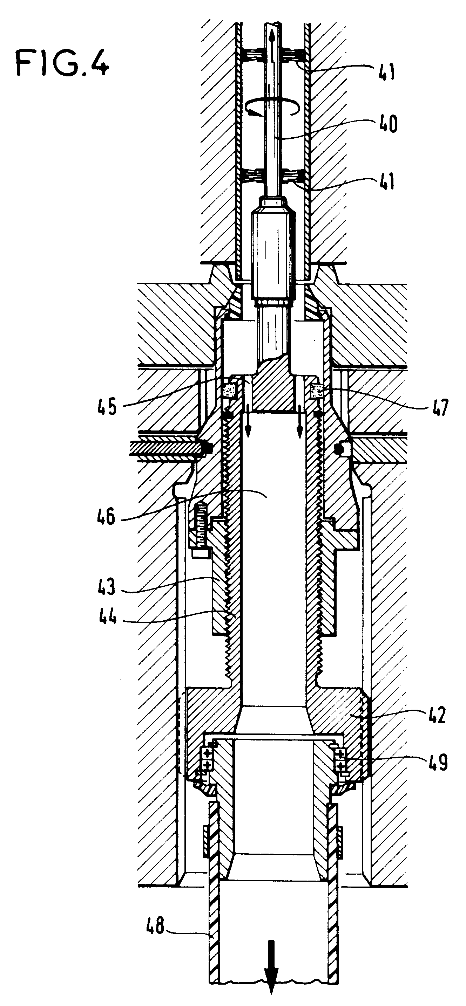

L'outillage de nettoyage de l'intérieur des tubes est représenté en figure 4. Il comporte une tige 40, portant une brosse flexible 41, entraînée en rotation par le moteur pneumatique par l'intermédiaire du pignon 42, et en translation par le système à écrou 43 et vis creuse 44 relié au moteur pneumatique. Les particules détachées de la surface interne du tube par la brosse sont aspirées par dépression à travers les canaux 45 et l'alésage interne 46 de la vis, un feutre périphérique 47 protégeant le filetage de la vis d'une pénétration de ces particules. L'aspiration des particules se poursuit à l'intérieur du câble de poussée 48 en matière plastique, par exemple en polyéthylène, sur l'extrémité duquel le pignon 42 tourne grâce à un roulement à billes 49.

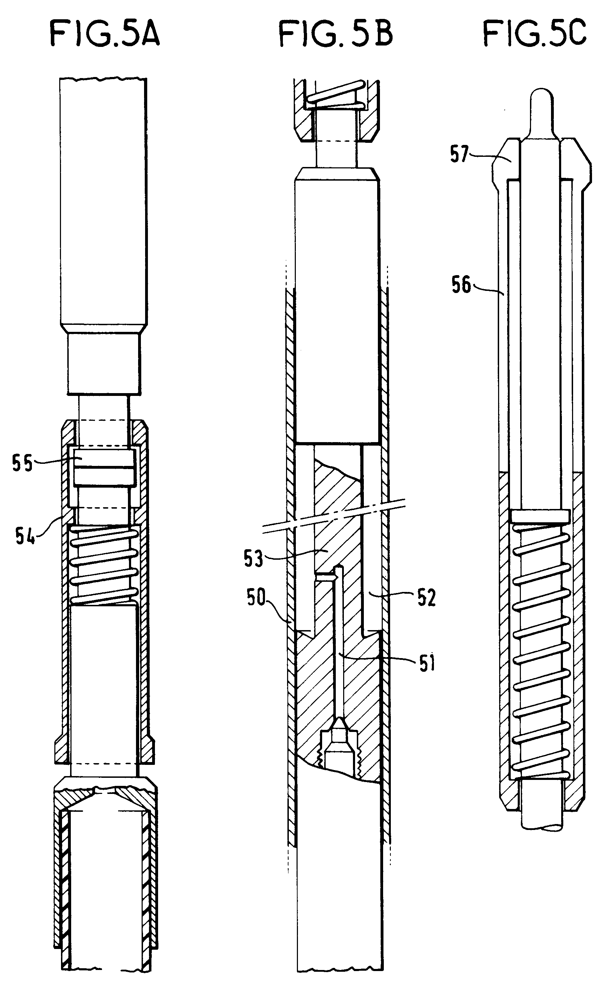

Les figures 5A, 5B et 5C représentent une baudruche de fixation provisoire du manchon à l'intérieur du tube, avant son accostage et son soudage. Cette baudruche 50, en polyuréthane, est gonflable par une pression interne d'eau distillée, pouvant s'élever à 1500 bars, arrivant par le conduit 51 dans la cavité 52 entre la baudruche et la tige 53. La pression déforme alors le manchon et le fixe provisoirement contre la surface du tube à réparer. Un contact électrique 55 du support de baudruche 54 permet de signaler par sa fermeture la présence du manchon dans la position correcte pour sa mise en place. Une partie de ce support du baudruche est souple, afin de permettre l'introduction du manchon dans la zone périphérique de la plaque tubulaire, où la paroi de la boîte à eau rend l'accès aux tubes plus difficile.

Le support de baudruche est muni près de son extrémité avant d'une pince 56 qui se rétracte quand on tire sur elle. Le cône avant 57 de cette pince facilite le cheminement du manchon dans le tube flexible et son introduction dans le tube à réparer.

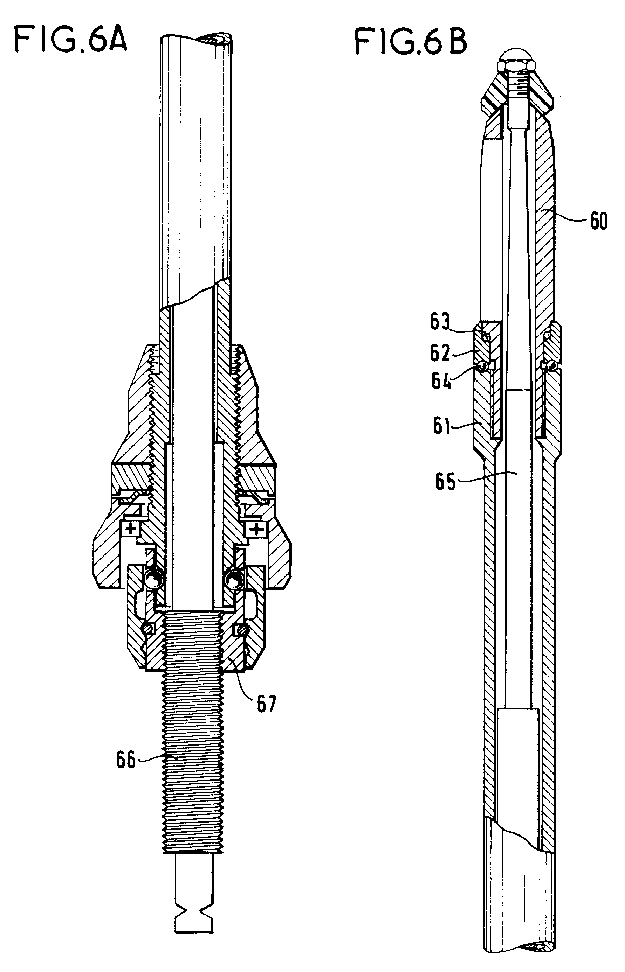

Le dudgeon à galets parallèles des figures 6A et 6B permet d'effectuer l'accostage du manchon contre la surface interne du tube, à l'intérieur de la plaque tubulaire pour assurer sa fixation avant soudage. Ces galets 60 comportent une bosse qui provoque une déformation très localisée du manchon, et tournent vis-à-vis de l'entretoise 61 de leur cage grâce à une butée à billes 62 et des roulements à billes 63, 64. L'avance de la broche 65 est assurée par vissage d'une partie filetée de celle-ci 66 dans un écrou démontable 67.

L'accostage du manchon dans le tube au-delà de la plaque tubulaire s'effectue par déformation contrôlée du manchon et du tube à réparer, avec comptage du nombre de tours de broche d'un dudgeon à galet inclinés, de type connu, non représenté, ou en pilotant par un calculateur le volume d'une baudruche, également non représentée, en fonction d'une pression interne d'eau introduit par une pompe doseuse (non représentée). On observe le changement de pente de la courbe de variation du volume en fonction de la pression, correspondant au franchissement de la limite élastique du métal, en introduisant successivement de faibles volumes d'eau (de 70 à 200 mm3) à l'intérieur de la baudruche ; puis, à partir de ce changement de pente, on introduit encore à l'intérieur de la baudruche un volume déterminé d'eau, fonction des valeurs de la pente et de la pression.

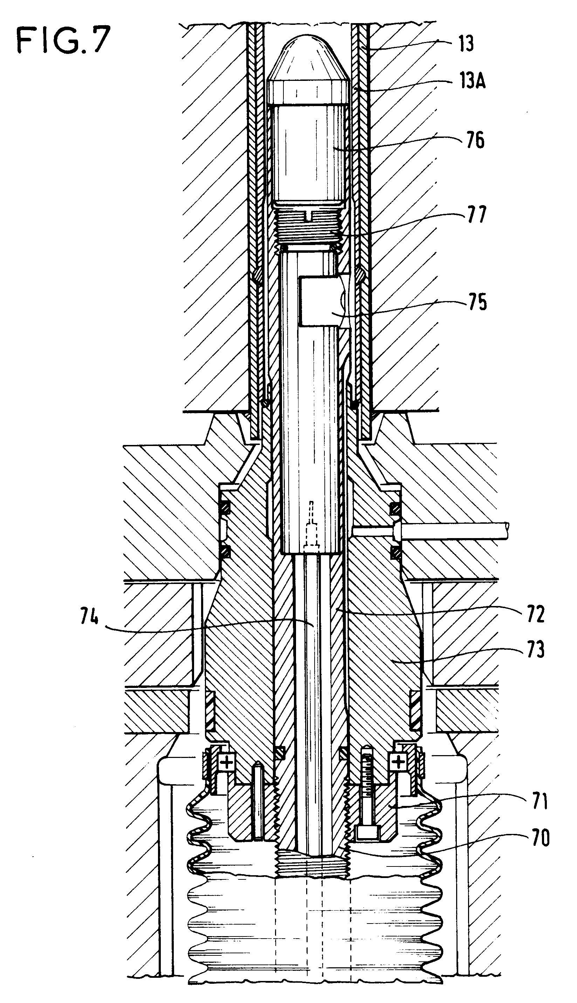

La lance de contrôle des soudures de la figure 7 est entraînée en rotation par le moteur pneumatique et en translation par un système filetée 70 et écrou 71. La lance elle-même 72 est disposée à l'intérieur du fourreau 73. Un câble coaxial 74, relié à un oscillateur ultrasonique disposé au voisinage du dispositif tireur-pousseur, passe à travers l'alésage interne de la vis creuse 70 et rejoint la sonde ultrasonique 75, reliée à la tête de sonde 76 à extrémité conique par un écrou 77. L'écho d'interface entre le manchon 13A et le tube 13 est enregistré par exemple tous les 100es de tour de la sonde et à chaque tour au cours de son déplacement en hélice. Ces enregistrements permettent de figurer sur un graphe l'interface de la zone soudée et la surface externe du tube à réparer dans cette zone.

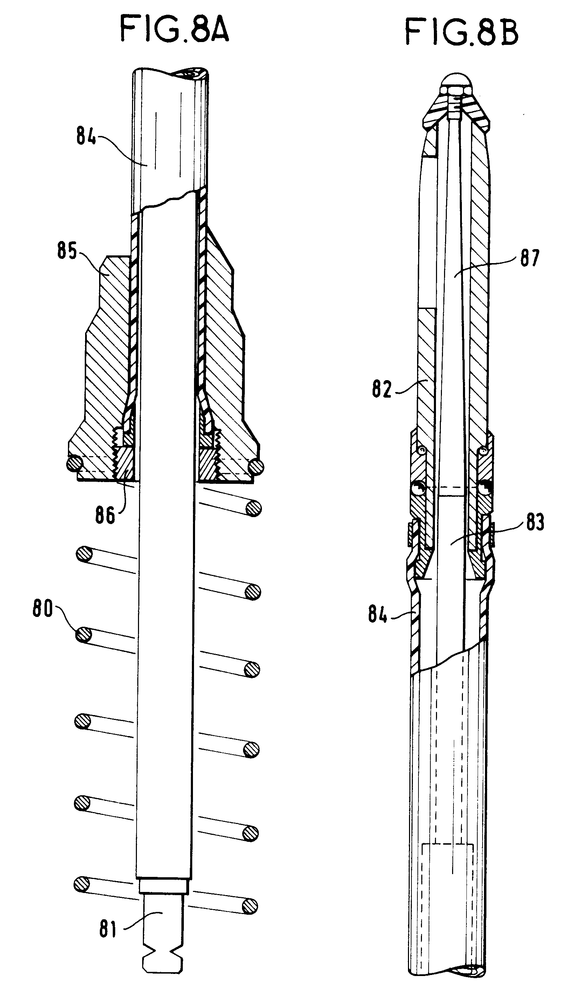

Le dudgeon à galets inclinés représenté en figures 8A et 8B est destiné à assurer un dudgeonnage final du manchon dans le tube. Il comporte un ressort 80 permettant d'écarter le carré d'entraînement 81, lié au câble d'entraînement, de la cage 82, afin de mettre les galets dans la position de diamètre circonscrit minimal. Après mise en place du dudgeon dans le manchon et dans l'unité motorisée d'entraînement, le ressort est comprimé par le câble de poussée. Le dudgeon comporte une tige longitudinale flexible 83 en matière thermoplastique telle qu'un polyamide-imide, entourée par une gaine 84, en matière plastique telle qu'un polyamide, munie à son extrémité postérieure d'une butée 85 entourant un écrou de butée 86. Pour les dudgeons souples, la butée s'appuie sur l'extrémité du manchon à insérer dans le tube. Leur tige flexible 87 est prolongée par une broche 83 en acier, à l'intérieur de la cage 82 en acier trempé. Le mors d'entraînement de la tige est muni de cannelures qui permettent son entraînement en rotation par le moyeu cannelé du moteur pneumatique, et en translation par glissement dans ces cannelures.

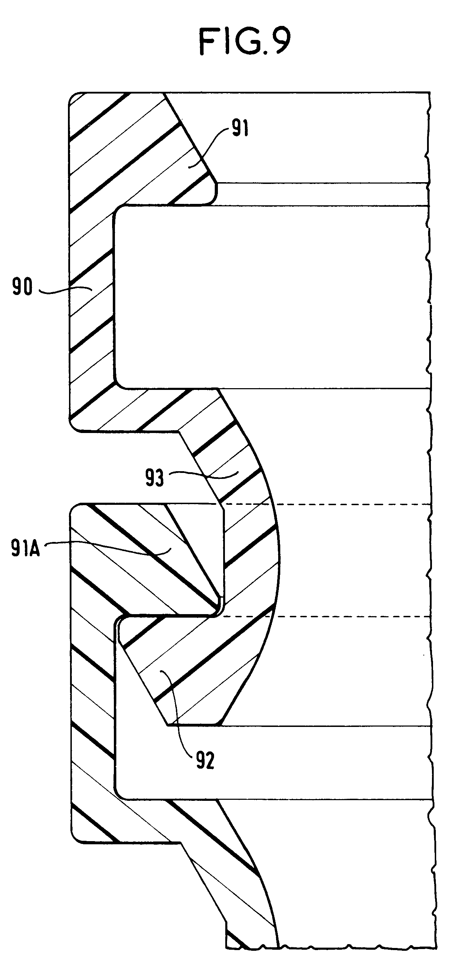

L'élément de tube souple, par exemple en polyamide, représenté en figure 9 comporte une partie cylindrique 90 à extrémité à chanfrein intérieur 91, se raccordant par l'intermédiaire d'une gorge souple 93 à une autre extrémité à chanfrein extérieur 92. Le raccordement d'éléments adjacents s'effectue en engageant le chanfrein extérieur 92 d'un élément dans le chanfrein extérieur 91A de l'autre.

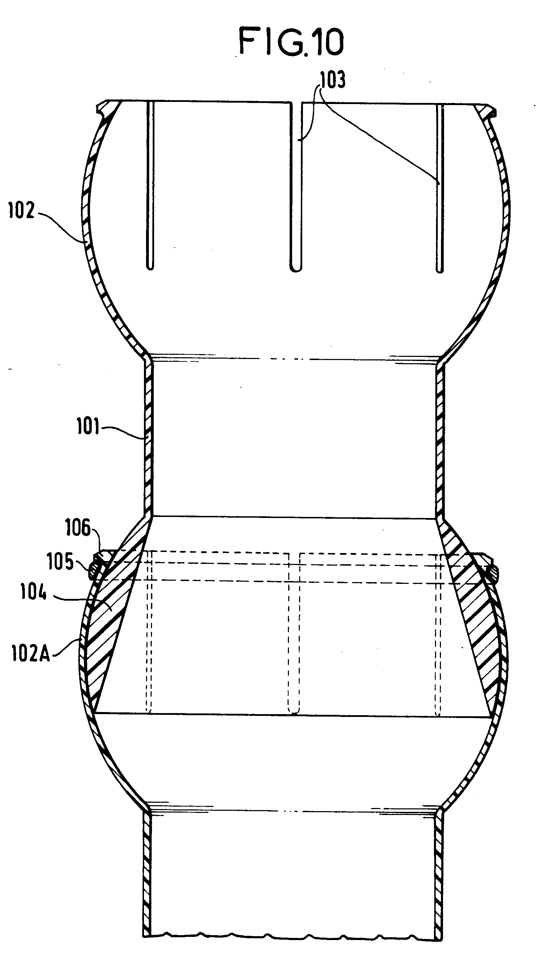

L'élément de tube souple de la figure 10, pouvant être également en polyamide, se compose d'une partie médiane cylindrique de faible épaisseur 101, se raccordant d'un côté à une extrémité femelle 102 de forme sphérique, également de faible épaisseur, et munie de fentes méridiennes 103, et de l'autre côté d'une extrémité mâle 104, de profil externe également de forme sphérique, mais plus épaisse. Le raccordement de deux éléments adjacents est facilité par la possibilité de déformation élastique de l'extrémité femelle 102A d'un élément grâce à ses fentes méridiennes lors de son engagement sur l'extrémité mâle de l'élément adjacent. Un anneau en matière plastique 105 est mis en place et empêche les fentes de s'ouvrir.

Les tuyaux souples formés d'éléments selon la figure 9 ou selon la figure 10 possèdent une grande flexibilité leur permettant de rejoindre les extrémités des tubes de toute la plaque tubulaire, même ceux proches de sa périphérie, à partir du dispositif tireur-pousseur à travers l'ouverture de visite de la boîte à eau.

## Revendications

1. Machine de chemisage interne à distance par manchon de l'extrémité de tubes (13) d'échangeur de chaleur sertis dans une plaque tubulaire (14), au-dessous de laquelle est disposée une boîte à eau (11) accessible depuis l'extérieur par une ouverture de visite (12), par un procédé comportant l'introduction d'un manchon dans l'extrémité du tube, l'expansion diamétrale du manchon dans une zone à l'intérieur de la plaque tubulaire et dans une zone au-delà de cette plaque tubulaire, puis le dudgeonnage et le soudage du manchon dans chacune des zones d'expansion, cette machine comportant un dispositif tireur-pousseur à l'extérieur de la boîte à eau, un tube flexible (15) reliant le dispositif tireur-pousseur à une unité motorisée (16) d'entraînement des outils de fixation du manchon, un chargeur d'outils (25, 26) en tête d'un câble (20) entraîné par le tireur-pousseur, et des moyens pour amener successivement l'extrémité du tube flexible en face de l'extrémité de chacun des tubes, caractérisé en ce que l'unité motorisée d'entraînement des outils comporte deux moyeux cannelés superposés (30, 33), dont l'un est entraîné par un moteur électrique à faible vitesse (31), et l'autre par un moteur pneumatique à vitesse de rotation élevée (34).

2. Machine selon la revendication 1, caractérisé en ce que le moteur pneumatique est monté sur un palier (36) et est muni d'une cellule de force (37) mesurant son couple.

3. Machine selon les revendications 1 ou 2, caractérisé en ce que les outils de dudgeonnage sont entraînés par le moyeu cannelé (33) du moteur pneumatique venant en prise avec un mors cannelé d'entraînement de leur broche, dont les cannelures permettent le glissement du mors.

4. Machine selon la revendications 3, caractérisé en ce que les outils de dudgeonnage sont munis d'un ressort (80) maintenant leur broche en position sensiblement écartée de la cage (82) au repos, et comprimable par le câble de poussée.

5. Machine selon l'une des revendications 1 à 4, caractérisé en ce que l'outil de nettoyage de l'intérieur des tubes comprend une brosse flexible (41) entraînée en rotation par le moteur pneumatique et en translation par un système à vis et écrou (43), la vis étant munie d'un alésage central (46) d'aspiration des particules détachées par la brosse, et le câble de poussée (47) de la brosse flexible étant lui-même muni d'un passage interne d'évacuation de ces particules.

6. Machine selon l'une des revendications 1 à 5, caractérisé en ce que l'outil de mise en place du manchon à l'intérieur du tube comprend une baudruche (50) en matériau plastique gonflable sous l'effet d'une pression hydraulique dans une chambre interne (52).

7. Machine selon la revendication 6, caractérisé en ce que la baudruche (50) est portée par un support à cône rétractable muni d'un contact (55) de détection de la position correcte du manchon à l'intérieur du tube.

8. Machine selon les revendications 6 ou 7, caractérisé en ce que la baudruche est reliée à une pompe doseuse de très faibles volumes, et à des moyens de comparaison de l'augmentation de pression après chaque coup de pompe à l'augmentation après les coups de pompe précédents.

9. Machine selon l'une des revendications 1 à 8, caractérisé en ce que l'outil d'accostage du manchon contre le tube à l'intérieur de la plaque tubulaire est un dudgeon à galets parallèles à la broche, munis d'une bosse de déformation localisée du manchon, à entraînement par le moteur pneumatique par l'intermédiaire d'un système à vis (66) et écrou (67).

10. Machine selon l'une des revendications 1 à 8, caractérisé en ce que l'outil d'accostage du manchon contre le tube au-delà de la plaque tubulaire est un dudgeon à galets inclinés ou une baudruche à volume contrôlé en fonction de la pression hydraulique interne jusqu'au-delà de la limite élastique du tube.

11. Machine selon l'une des revendications 1 à 10, caractérisé en ce que les outils de soudage du manchon sur le tube sont des lances souples entraînées en rotation par le moteur électrique, reliées à des conduits d'alimentation en eau, gaz, et électricité internes au câble de poussée.

12. Machine selon l'une des revendications 1 à 11, caractérisé en ce qu'elle comporte près de l'unité motorisé d'entraînement des outils des cellules de détection de la présence d'outils et de comptage du nombre de tours des outils.

13. Machine selon l'une des revendications 1 à 12, caractérisé en ce qu'elle comporte des sondes à ultrasons (75) de vérification des soudures, entraînées en rotation par le moteur pneumatique et en translation par un système à vis (70) et écrou (71) relié au moteur pneumatique, enregistrant les échos d'interface entre le manchon et le tube et l'écho de fond sur le tube.

14. Machine selon l'une des revendications 1 à 13, caractérisé en ce que son tube flexible est constitué par un assemblage d'éléments cylindriques (90) à extrémités (91, 92) emboîtées les unes dans les autres.

15. Machine selon l'une des revendications 1 à 13, caractérisé en ce que son tube flexible est constitué par un assemblage d'éléments emboîtés à extrémités (102, 103) formant rotules.


**Claims**

1. A machine for remotely lining the inside of the ends of heat exchanger tubes (13) with a sleeve, said end being crimped in a tube plate (14) with a water box (11) being disposed beneath the tube plate, the water box being accessible from the outside via an inspection hole (12), the lining being effected by a method including inserting a sleeve into the end of the tube, diametrically expanding the sleeve in a zone inside the tube plate and in a zone beyond the tube plate, then attaching the sleeve to each of its expansion zones by rolling and welding, said machine including a push-pull device outside the water box, a flexible tube (15) connecting the push-pull device to a motorized unit (16) for driving the sleeve-fixing tools, a tool loader (25, 26) at the head of a cable (20) driven by the push-pull device, and means for bringing the end of the flexible tube successively in face of the end of each of the tubes, characterized in that the motorized unit for driving the tools comprises two superposed fluted hubs (30, 33) one of which is driven by a low speed electric motor (31) and the other is driven by a pneumatic motor (34) having a high speed of rotation.

2. A machine according to claim 1, characterized in that the pneumatic motor is mounted on a bearing (36) and is provided with a force cell (37) for measuring its torque.

3. A machine according to claim 1 or 2, characterized in that the tools for tube attachment by rolling are driven by the fluted hub (33) of the pneumatic motor engaging fluted drive jaws in the spindle thereof, with the flutes therein allowing the jaws to slide axially.

4. A machine according to claim 3, characterized in that the tools for tube attachment by rolling are provided with a spring (80) for maintaining their spindle in a position which is substantially distant from the cage (82) when at rest, which springs are compressible by the thrust cable.

5. A machine according to any one of claims 1 to 4, characterized in that the tool for cleaning the insides of the tubes comprises a flexible brush (41) rotated by the pneumatic motor and moved in translation by a nut and screw system (43), the screw being provided with a central bore (46) through which particles detached by the brush are sucked, and the thrust cable (47) of the flexible brush is itself provided with an internal passage for removing said particles.

6. A machine according to any one of claims 1 to 5, characterized in that the tool for positionning the sleeve inside the tube includes a skin (50) of plastic material which is inflatable under the effect of hydraulic pressure in an internal chamber (52).

7. A machine according to claim 6, characterized in that the skin (50) is carried by a support having a retractable cone provided with a contact (55) for detecting that the sleeve is in the proper position inside the tube.

8. A machine according to claim 6 or 7, characterized in that the skin is connected to a metering pump for delivering very small volumes and to means for comparing the increase in pressure after each pump stroke with the increase after preceding pump strokes.

9. A machine according to any one of claims 1 to 8, characterized in that the tool for docking the sleeve against the tube inside the tube plate is an attachment by rolling tool having rollers parallel to its spindle, and provided with a projection for localized deformation of the sleeve, this tool being driven by the pneumatic motor via a screw (66) and nut (67) system.

10. A machine according to any one of claims 1 to 8, characterized in that the tool for docking the sleeve against the tube beyond the tube plate is an attachment by rolling tool having sloping rollers, or a skin whose volume is controlled as a function of the internal hydraulic pressure so as to exceed the elastic limit of the tube.

11. A machine according to any one of claims 1 to 10, characterized in that the tools for welding the sleeve to the tube are flexible lances driven in rotation by the electric motor and connected to ducts for feeding them with water, gas, and electricity, said ducts running inside the thrust cable.

12. A machine according to any one of claims 1 to 11, characterized in that it includes cells located close to the motorized unit for driving the tools and serving to detect the presence of the tools and to count the numbers of turns of the tools.

13. A machine according to any one of claims 1 to 12, characterized in that it includes ultrasonic probes (75) for checking the welds, said probes being rotated by the pneumatic motor and being moved axially by a screw (70) and nut (71) system connected to the pneumatic motor, said probes serving to pick up the interface echoes between the sleeve and the tube and the echo from the bottom of the tube.

14. A machine according to any one of claims 1 to 13, characterized in that its flexible tube is constituted by an assembly of cylindrical elements (90) having ends (91, 92) which fit one into the other.

15. A machine according to any one of claims 1 to 13, characterized in that its flexible tube is constituted by an assembly of interfitting elements having ball-and-socket forming ends (102, 103).

**Patentansprüche**

1. Maschine zum fernbetätigten Auskleiden des Endes von Wärmetauscherrohren (13) mit einer Manschette, wobei die Rohre in einem Rohrboden (14) eingepaßt sind, unterhalb dessen eine Wasserkammer (11) angeordnet ist, die von außen her durch einen Inspektionsöffnung (12) zugänglich ist, wobei das Auskleiden durch ein Verfahren erfolgt, welches die Einführung einer Manschette in das Ende des Rohrs, die diametrale Expansion der Manschette in einer Zone innerhalb des Rohrbodens sowie in einer Zone jenseits dieses Rohrbodens, sodann das Einwalzen und das Anschweißen der Manschette in jeder der Expansionszonen einschließt, und wobei die Maschine eine Zieh-Schub-Vorrichtung außerhalb der Wasserkammer, ein flexibles Rohr (15), welches die Zieh-Schub-Vorrichtung mit einer Motor-Einheit (16) zum Antreiben der Befestigungswerkzeuge für die Manschette, einen Werkzeuglader (25, 26) an der Spitze eines von der Zieh-Schub-Vorrichtung angetriebenen Kabels (20), und Mittel aufweist, die dazu dienen, das Ende des flexiblen Rohres nacheinander gegenüber dem Ende jedes der Wärmetauscherrohre anzubringen, dadurch gekennzeichnet, daß die Motor-Einheit zum Antreiben der Werkzeuge zwei gerippte, übereinander angeordnete Naben (30, 33) aufweist, von denen die eine von einem langsam laufenden Elektromotor (31), und die andere von einem schnell laufenden pneumatischen Motor (34) angetrieben wird.

2. Maschine nach Anspruch 1, dadurch gekennzeichnet, daß der pneumatische Motor auf einem Lager (36) montiert und mit einer Kraftzelle (37) zum Messen des Drehmoments ausgerüstet ist.

3. Maschine nach den Ansprüchen 1 oder 2, dadurch gekennzeichnet, daß die Walzwerkzeuge durch die gerippte Nabe (33) des pneumatischen Motors angetrieben werden, die in Kontakt mit einer gerippten Antriebsspannbacke ihrer Spindel gelangt, deren Rippen das Gleiten der Spannbacke erlauben.

4. Maschine nach Anspruch 3, dadurch gekennzeichnet, daß die Walzwerkzeuge mit einer Feder (80) versehen sind, die in der Ruhestellung die Spindel der Werkzeuge gegenüber dem Käfig (82) im wesentlichen auf Abstand hält und durch das Schubkabel zusammenpreßbar ist.

5. Maschine nach einem der Ansprüche 1 bis 4, dadurch gekennzeichnet, daß das Reinigungswerkzeug für das Innere der Rohre eine flexible Bürste (41) aufweist, die durch den pneumatischen Motor in Drehbewegung und durch ein Schrauben-Mutter-System (43) in Längsbewegung versetzt wird, wobei die Schraube mit einer Zentralbohrung (46) zum Ansaugen der von der Bürste abgelösten Teilchen versehen ist und das Schubkabel (47) der flexiblen Bürste selber mit einem inneren Kanal zum Abführen dieser Teilchen versehen ist.

6. Maschine nach einem der Ansprüche 1 bis 5, dadurch gekennzeichnet, daß das Werkzeug zum positionieren der Manschette im Inneren des Rohrs eine Ballonhaut (50) aus Kunststoff aufweist, die unter der Einwirkung eines in einer inneren Kammer (52) herrschenden Drucks aufblasbar ist.

7. Maschine nach Anspruch 6, dadurch gekennzeichnet, daß die Ballonhaut (50) von einem Halter mit einziehbarem Konus getragen wird, der mit einem Kontakt (55) zur Erfassung der richtigen position der Manschette im Inneren des Rohres versehen ist.

8. Maschine nach einem der Ansprüche 6 oder 7, dadurch gekennzeichnet, daß die Ballonhaut mit einer Dosierpumpe für sehr kleine Volumina sowie an Mittel zum Vergleichen der Drucksteigerung nach jedem pumpenhub mit der nach den vorhergehenden Hüben der Pumpe aufgetretenen Drucksteigerung angeschlossen ist.

9. Maschine nach einem der Ansprüche 1 bis 8, dadurch gekennzeichnet, daß das Werkzeug zum Anlegen der Manschette gegen das Rohr im Inneren des Rohrbodens ein Walzgerät mit parallel zur Spindel angeordneten Rollen ist, welches mit einem Höcker zur lokalisierten Verformung der Manschette versehen ist und vom pneumatischen Motor über ein System aus Schraube (66) und Mutter (67) angetrieben wird.

10. Maschine nach einem der Ansprüche 1 bis 8, dadurch gekennzeichnet, daß das Werkzeug zum Anlegen der Manschette gegen das Rohr im Inneren des Rohrbodens ein Walzgerät mit schräg gestellten Rollen oder eine Ballonhaut mit einem Volumen ist, das in Abhängigkeit vom hydraulischen Innendruck bis über die Elastizitätsgrenze des Rohres hinaus gesteuert wird.

11. Maschine nach einem der Ansprüche 1 bis 10, dadurch gekennzeichnet, daß die Werkzeuge zum Anschweißen der Manschette am Rohr nachgiebige Lanzen sind, die vom Elektromotor in Umlauf versetzt werden und an Speiseleitungen für Wasser, Gas und Elektrizität im Inneren des Schubkabels angeschlossen sind.

12. Maschine nach einem der Ansprüche 1 bis 11, dadurch gekennzeichnet, daß sie in der Nähe der Motor-Einheit für den Antrieb der Werkzeuge Zellen zum Erfassen der Präsenz von Werkzeugen und zum Zählen der Anzahl der Umdrehungen der Werkzeuge aufweist.

13. Maschine nach einem der Ansprüche 1 bis 12, dadurch gekennzeichnet, daß sie Ultraschallsonden (75) zur Überprüfung der Schweißungen aufweist, wobei die Sonden durch den pneumatischen Motor in Drehung und durch ein System aus Schraube (70) und Mutter (71), das mit dem pneumatischen Motor verbunden ist, in Längsbewegung versetzt werden und die Schnittflächenechos zwischen der Manschette und dem Rohr sowie das Rückwandecho am Rohr registrieren.

14. Maschine nach einem der Ansprüche 1 bis 13, dadurch gekennzeichnet, daß ihr flexibles Rohr aus dem Zusammenbau zylindrischer Elemente (90) mit ineinandergreifenden Enden (91, 92) besteht.

15. Maschine nach einem der Ansprüche 1 bis 13, dadurch gekennzeichnet, daß ihr flexibles Rohr aus dem Zusammenbau ineinandergreifender Elemente (102, 103) besteht, die Kugelgelenke bilden.

# FIG.1

FIG.2A

FIG.2B

FIG.3

EP 0 343 368 B1

FIG.4

# FIG.5A    FIG.5B    FIG.5C

# FIG.6A

# FIG.6B

# FIG.7

13

13A

76

77

75

74

72

73

71

70

# FIG.8A

# FIG.8B

# FIG.9

# FIG.10